# EUROPEAN PATENT APPLICATION

(11) **EP 2 685 240 A1**
(43) Date of publication of application: **15.01.2014**
(21) Application number: 13174163.9
(22) Date of filing: 27.06.2013
(51) Int. Cl.: G01N 21/65, G01N 21/85

(54) **Servo gauge using raman spectroscopy for storage tank applications**

(30) Priority: 10.07.2012 US 201261669982 P; 26.06.2013 US 201313927738
(71) Applicant: Honeywell International Inc., Morristown, NJ 07962-2245 (US)
(72) Inventor: Versluijs, Pieter, Morristown, NJ 07962-2245 (US); Van Bekkum, Frank, Morristown, NJ 07962-2245 (US)
(74) Representative: Houghton, Mark Phillip

(57) **Abstract**

An apparatus includes a servo gauge (106). The servo gauge includes a displacer (108) configured to be raised and lowered within material (104) in a tank (102). The servo gauge also includes at least one light source (224) configured to illuminate a sample of the material at the displacer. The servo gauge further includes at least one detector (226) configured to measure radiation that has interacted with the sample of the material at the displacer. In addition, the servo gauge includes an analyzer (228) configured to perform Raman spectroscopy analysis of measurements from the at least one detector and identify at least one characteristic of the material.

## Description

### CROSS-REFERENCE TO RELATED APPLICATION AND PRIORITY CLAIM

This application claims priority under 35 U.S.C. § 119(e) to U.S. Provisional Patent Application No. 61/669,982 filed on July 10, 2012, which is hereby incorporated by reference.

### TECHNICAL FIELD

This disclosure relates generally to inventory management systems. More specifically, this disclosure relates to a servo gauge that uses Raman spectroscopy for storage tank applications.

### BACKGROUND

Liquid natural gas (LNG) is routinely stored in large storage tanks. The value of liquid natural gas is often based on its "heat content," which is a measure of the amount of heat that is released when the liquid natural gas is burned. Conventional storage tanks often include level-temperature-density (LTD) gauges, which can be used to estimate the heat content of liquid natural gas in the storage tanks. However, conventional LTD gauges often estimate the temperature and density of liquid natural gas within a tank, and those values are then used to estimate the chemical composition of the liquid natural gas within the tank. This process can create relatively large errors in the heat content measurements, such as errors of up to 5% or even more. Depending on whether the heat content is overestimated or underestimated, these errors can result in significant monetary losses for either the buyer or the seller of the liquid natural gas.

### SUMMARY

This disclosure provides a servo gauge that uses Raman spectroscopy for storage tank applications.

In a first embodiment, an apparatus includes a servo gauge. The servo gauge includes a displacer configured to be raised and lowered within material in a tank. The servo gauge also includes at least one light source configured to illuminate a sample of the material at the displacer. The servo gauge further includes at least one detector configured to measure radiation that has interacted with the sample of the material at the displacer. In addition, the servo gauge includes an analyzer configured to perform Raman spectroscopy analysis of measurements from the at least one detector and identify at least one characteristic of the material.

In a second embodiment, a method includes positioning a displacer of a servo gauge within material in a tank. The method also includes illuminating a sample of the material at the displacer and measuring radiation that has interacted with the sample of the material at the displacer. The method further includes performing Raman spectroscopy analysis of the measured radiation to identify at least one characteristic of the material.

In a third embodiment, a non-transitory computer readable medium embodies a computer program. The computer program includes computer readable program code for receiving measurements of radiation that has interacted with a sample of material in a tank at a displacer of a servo gauge positioned within the tank. The computer program also includes computer readable program code for performing Raman spectroscopy analysis of the measurements to identify at least one characteristic of the material.

Other technical features may be readily apparent to one skilled in the art from the following figures, descriptions, and claims.

### BRIEF DESCRIPTION OF THE DRAWINGS

For a more complete understanding of this disclosure, reference is now made to the following description, taken in conjunction with the accompanying drawings, in which:

FIGURE 1 illustrates an example inventory management system having a servo gauge supporting Raman spectroscopy according to this disclosure;

FIGURES 2A and 2B illustrate example servo gauges supporting Raman spectroscopy according to this disclosure; and

FIGURE 3 illustrates an example method for using a servo gauge supporting Raman spectroscopy in an inventory management system according to this disclosure.

### DETAILED DESCRIPTION

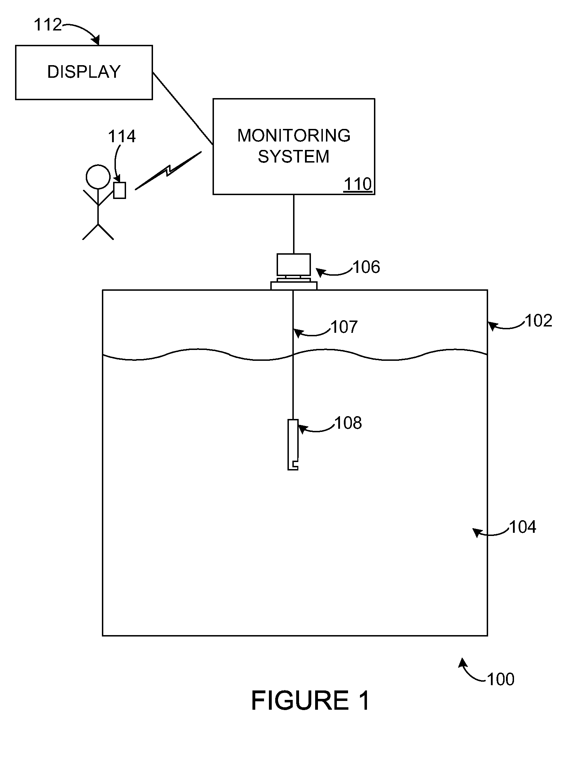

FIGURES 1 through 3, discussed below, and the various embodiments used to describe the principles of the present invention in this patent document are by way of illustration only and should not be construed in any way to limit the scope of the invention. Those skilled in the art will understand that the principles of the invention may be implemented in any type of suitably arranged device or system.

FIGURE 1 illustrates an example inventory management system 100 having a servo gauge supporting Raman spectroscopy according to this disclosure. As shown in FIGURE 1, the system 100 includes a tank 102 that can store one or more materials 104. The tank 102 represents any suitable structure for receiving and storing at least one liquid or other material. The tank 102 could, for example, represent a storage tank for liquid natural gas. The tank 102 could have any suitable shape and size. Also, the tank 102 could form part of a larger structure. The larger structure could represent any fixed or movable structure containing or associated with one or more tanks 102, such as a movable tanker vessel, railcar, or truck or a fixed tank farm.

A servo gauge 106 facilitates analysis of the material 104 stored in the tank 102. For example, the servo gauge 106 could be used to identify the chemical composition of the material 104 in the tank 102 using Raman spectroscopy. The servo gauge 106 includes a displacer 108 that is physically raised and lowered within the tank 102. The displacer 108 sinks within the material 104 in the tank 102, and the displacer 108 supports the use of Raman spectroscopy for analyzing the material 104 at different levels within the tank 102. The servo gauge 106 can also be used to perform other functions, such as determining the level of the material 104 in the tank 102.

A connector 107 couples the displacer 108 to the main housing of the servo gauge 106. The connector 107 can be moved by the servo gauge 106 to control the raising and lowering of the displacer 108. For example, the connector 107 could be wound around a drum in the servo gauge 106, and the servo gauge 106 could rotate the drum to raise or lower the displacer 108.

The servo gauge 106 includes any suitable structure for analyzing a material in a tank using Raman spectroscopy. The connector 107 includes any suitable structure for connecting a displacer to another portion of a servo gauge. The connector 107 could, for example, include a fiber optic cable for transporting laser light or other illumination to and from the displacer 108. The displacer 108 includes any suitable structure that is moved within a tank and that samples material in a tank.

The determined characteristic(s) of the material 104 in the tank 102 can be provided from the servo gauge 106 to a monitoring system 110 over a wired or wireless link. The monitoring system 110 can use the determined characteristic(s) of the material 104 in any suitable manner. For example, the monitoring system 110 could notify personnel associated with the tank 102, such as by displaying the determined characteristic(s) on a display 112 or by transmitting the determined characteristic(s) to a wireless or other user device 114.

In one aspect of operation, the servo gauge 106 can raise and lower the displacer 108 so that the displacer 108 reaches different locations within the material 104 in the tank 102. At one or more locations, the servo gauge 106 analyzes the material 104 in the tank 102 using Raman spectroscopy. During the analysis, for example, the servo gauge 106 can determine the chemical composition of the material 104. The chemical composition or information based on the chemical composition (such as heat content) could then be provided to an external device or system, such as the monitoring system 110.

The servo gauge 106 can repeat this analysis of the material 104 at various heights within the tank 102. For example, this process could be repeated at a set number of specific locations within the tank 102, at a number of locations separated by a specified step distance within the tank 102, or continuously through the entire height of the material 104 in the tank 102.

The information obtained by or from the servo gauge 106 could be used in any suitable manner. For example, the chemical composition can be used in various ways, such as to calculate the heat content of liquid natural gas stored in the tank 102. Among other things, this enables liquid natural gas storage owners/operators to accurately measure the chemical composition of stored liquid natural gas. With that information, the actual heat content (and thus the actual commercial value) of the liquid natural gas can be more accurately assessed. Moreover, this information could be used to support other functions, such as safety-related functions. As a specific example, this information can be used to determine whether liquid natural gas in the tank 102 is undergoing stratification. These functions can generate results that are far more accurate than the results obtainable using conventional level-temperature-density (LTD) gauges.

Although FIGURE 1 illustrates one example of an inventory management system 100 having a servo gauge 106 supporting Raman spectroscopy, various changes may be made to FIGURE 1. For example, a system could include any number of tanks, servo gauges, monitoring systems, displays, and user devices. Also, the makeup and arrangement of the inventory management system 100 are for illustration only. Components could be added, omitted, combined, subdivided, or placed in any other suitable configuration according to particular needs. In addition, FIGURE 1 illustrates one operational environment in which a servo gauge supporting Raman spectroscopy can be used. This functionality could be used in any other suitable system.

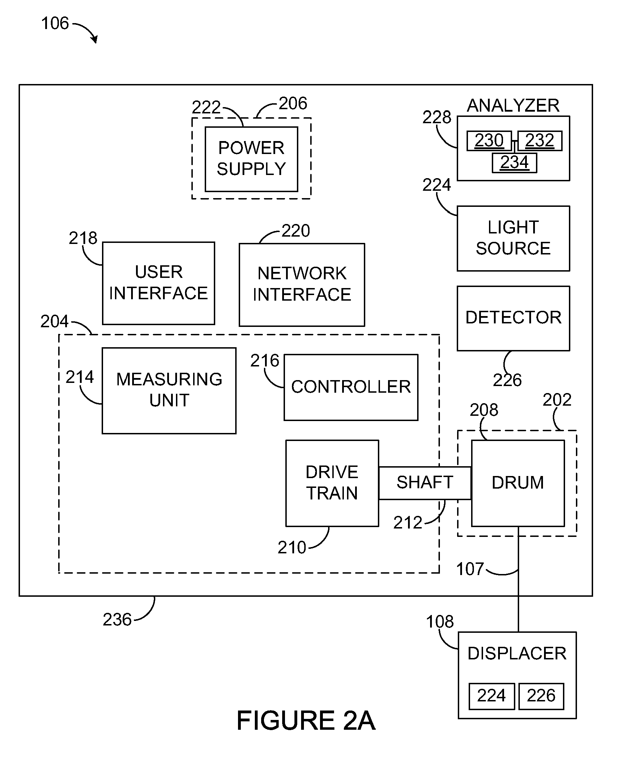

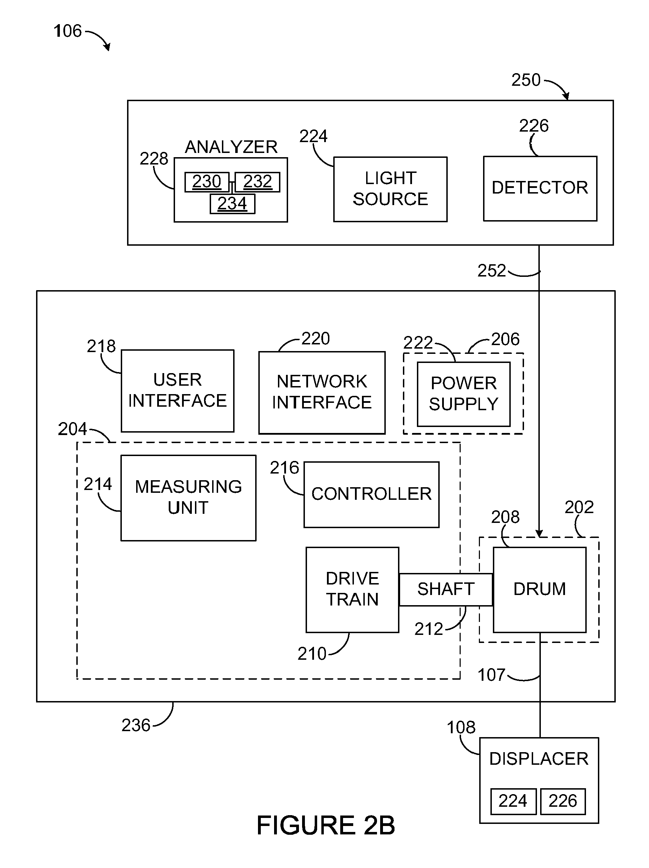

FIGURES 2A and 2B illustrate example servo gauges 106 supporting Raman spectroscopy according to this disclosure. As shown in FIGURE 2A, the servo gauge 106 includes three main compartments, namely a drum compartment 202, a drive compartment 204, and a power supply compartment 206. The drum compartment 202 includes a drum 208 on which a wire, tape, or other connector 107 is wound. The drum 208 can be rotated in one direction by the drive compartment 204 to lower the displacer 108, and the drum 208 can be rotated in another direction by the drive compartment 204 to raise the displacer 108. The drum 208 includes any suitable structure for raising and lowering a displacer via rotation, such as a cylindrical-shaped object.

The drive compartment 204 includes a drive train 210, which imparts rotation to the drum 208 via a shaft 212. For example, the drive train 210 or shaft 212 could generate a magnetic field, and magnet coupling can be used to convey torque between the shaft 212 and the drum 208. In these embodiments, no direct connection may be needed between the drum compartment 202 and the drive compartment 204. However, other techniques for causing rotation of the drum 208 could be used, such as when the shaft 212 is physically connected to the drum 208. The drive train 210 includes any suitable structure for imparting rotation to a drum. In particular embodiments, the drive train 210 includes a stepper motor that causes the drum 208 to rotate in specified steps, meaning the drum 208 does not rotate freely but in defined amounts or "steps." In other embodiments, the drive train 210 can rotate the drum 208 freely.

The drive compartment 204 may optionally include a measuring unit 214, which could be used to determine the level of material 104 in the tank 102. The measuring unit 214 could use any suitable technique to identify the level of material 104 in the tank 102. For example, the weight of the displacer 108 could vary depending on whether the displacer 108 is contacting the material 104. The measuring unit 214 could therefore use the torque on the drum 208 to detect when the displacer 108 comes into contact with the material 104. The measuring unit 214 includes any suitable structure for measuring a level of material in a tank.

A controller 216 controls the overall operation of the servo gauge 106. For example, the controller 216 could control the raising and lowering of the displacer 108. The controller 216 could also detect a mechanical fault with the servo gauge 106, such as by using measured torques from the measuring unit 214. The controller 216 includes any suitable structure for controlling operation of a servo gauge, such as at least one microprocessor, microcontroller, field programmable gate array (FPGA), digital signal processor (DSP), or other processing or control device.

In this example, the servo gauge 106 further includes a user interface 218 and a network interface 220. The user interface 218 facilitates communication between the servo gauge 106 and an operator or other personnel. The user interface 218 could provide data from an operator to the controller 216, such as a command to raise or lower the displacer 108. The user interface 218 could also allow the personnel to review measurement data generated by the servo gauge 106. The user interface 218 includes any suitable interface for interacting with one or more users, such as a keypad or keyboard and a display.

The network interface 220 facilitates the communication of data to or from the servo gauge 106. For example, the network interface 220 could receive measurements from the servo gauge 106 and transmit the measurements to one or more external destinations (such as the monitoring system 110). The network interface 220 includes any suitable structure supporting wired or wireless communications, such as an Ethernet interface, an RF transceiver, or other wired or wireless interface.

The power supply compartment 206 includes a power supply 222, which provides operating power to various components of the servo gauge 106. The power supply 222 includes any suitable structure for providing power, such as a battery, fuel cell, or solar cell.

As noted above, the servo gauge 106 includes various components supporting Raman spectroscopy to determine one or more characteristics of the material 104 in the tank 102. As shown in FIGURE 2A, the servo gauge 106 includes at least one light source 224, at least one detector 226, and an analyzer 228. The light source 224 illuminates a sample of the material 104 in the tank 102. The light source 224 includes any suitable structure for generating illumination suitable for Raman spectroscopy, such as at least one laser, light emitting diode, or other radiation source.

The detector 226 measures radiation that has interacted with the sample of the material 104. For example, the detector 226 could measure the intensity of light that has interacted with the sample of the material 104 at various wavelengths. The detector 226 includes any suitable structure for measuring light that passes through or otherwise interacts with a sample of material. In particular embodiments, the detector 226 includes a photodetector, spectrometer, or other detection device.

The analyzer 228 analyzes measurements from the detector 226 to identify the chemical composition or other characteristic(s) of the sample of the material 104. For example, the analyzer 228 can analyze the measurements from the detector 226 to identify the inelastic or Raman scattering of light caused by the material 104. This information can then be used to identify the composition of the material 104. The analyzer 228 can use any suitable Raman spectroscopy technique for analyzing the material 104 that are known in the art. The analyzer 228 includes any suitable structure for implementing Raman spectroscopy analysis. In this example, the analyzer 228 includes at least one processing device 230, such as at least one microprocessor, microcontroller, FPGA, DSP, or other processing or control device. The analyzer 228 also includes at least one memory device 232 storing instructions and data used, generated, or collected by the processing device(s) 230. The analyzer 228 further includes at least one interface 234 facilitating communication with external devices or systems, such as the controller 216, user interface 218, or network interface 220.

The various components 202-234 of the servo gauge 106 reside within a housing 236. The housing 236 protects the other components of the servo gauge 106 and can be mounted to the roof or other structure of a tank 102. The housing 236 includes any suitable structure for protecting other components of a servo gauge, such as a metal enclosure.

Note that various components shown as residing within the housing 236 could reside elsewhere. For example, the light source 224 and/or the detector 226 could reside within the displacer 108. As another example, the analyzer 228 could reside outside of the housing 236, such as in the monitoring system 110.

An example of an alternate arrangement of the servo gauge 106 is shown in FIGURE 2B. Here, the light source 224, detector 226, and analyzer 228 are located within an electronics box 250. The electronics box 250 resides outside of the housing 236. At least one additional optical fiber 252 transports light between the electronics box 250 and the housing 236. A suitable coupling can be used to optically connect the optical fiber 252 and the optical fiber in the connector 107.

The electronics box 250 includes any suitable structure for housing one or more electronic components. While the electronics box 250 is shown here as being used with a single housing 236, the electronics box 250 could be coupled to multiple housings 236 of multiple servo gauges 106. When used with multiple servo gauges 106, the electronics box 250 could include multiple instances of the components 224-226 or 224-228, or the electronics box 250 could include a translation stage that allows light to be sent over and received from different optical fibers 252.

Although FIGURES 2A and 2B illustrate examples of a servo gauge 106 supporting Raman spectroscopy, various changes may be made to FIGURES 2A and 2B. For example, the functional division shown in FIGURES 2A and 2B is for illustration only. Components could be added, omitted, combined, subdivided, or placed in any other suitable configuration according to particular needs. As a particular example, the functionality of the measuring unit 214 and/or the controller 216 could be integrated into the analyzer 228.

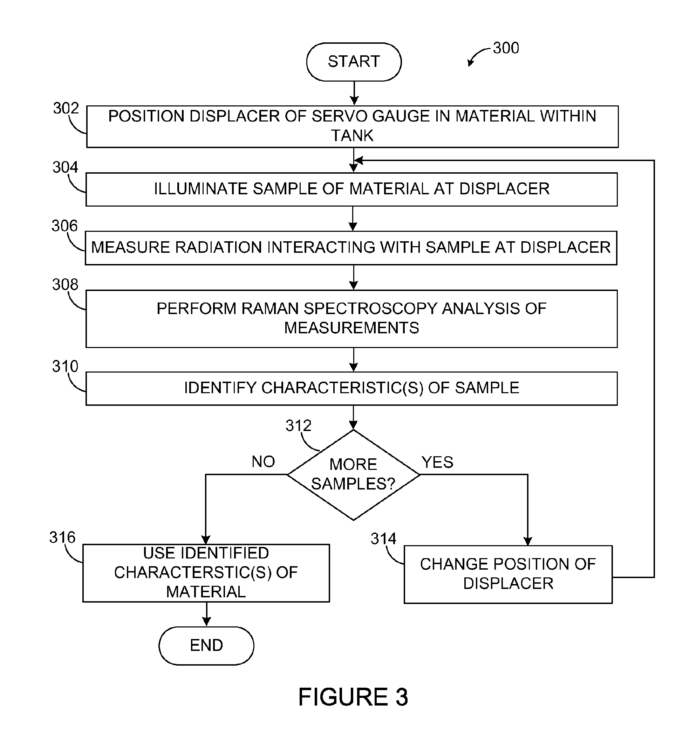

FIGURE 3 illustrates an example method 300 for using a servo gauge supporting Raman spectroscopy in an inventory management system according to this disclosure. As shown in FIGURE 3, a displacer is positioned in material within a storage tank at step 302. This could include, for example, the servo gauge 106 unwinding the connector 107 from around the drum 208 to lower the displacer 108 within the tank 102. The displacer 108 could be lowered to any suitable location, such as the lowest position in the tank 102 or the highest position where contact with the material 104 can be made.

A sample of the material at the displacer is illuminated at step 304. This could include, for example, the light source 224 generating visible, near infrared, near ultraviolet, or other radiation suitable for use with Raman spectroscopy. This could also include the light source 224 providing the radiation to the sample of material 104. The radiation could be provided in any suitable manner, such as by transporting the radiation from the light source 224 in the housing 236 to the displacer 108 over one or more optical fibers in the connector 107. Any suitable lenses or other optical devices could be used to provide the radiation to the material 104.

Radiation that has interacted with the sample of the material at the displacer is measured at step 306. This could include, for example, the detector 226 measuring the intensity of the illumination passing through the sample of material 104. Prior to measurement, the illumination passing through the sample could be transported over one or more optical fibers in the connector 107 to the detector 226 in the housing 236. Any suitable filters or other optical devices could be used to alter the radiation provided to the detector 226.

Raman spectroscopy analysis is performed using the measurements from the detector at step 308, and one or more characteristics of the sample of material are identified at step 310. The Raman spectroscopy analysis can, for example, analyze the inelastic scattering of light by the sample of material 104 to determine the composition of the sample. Various techniques for determining the composition of a material using Raman spectroscopy are known in the art and need not be described here. The characteristic(s) of the sample of material 104 can represent any suitable characteristic(s) and can vary depending on the type of material being analyzed. For liquid natural gas, one of the characteristics could be the heat content of the liquid natural gas at that location within the tank 102.

A determination is made whether another sample of the material in the tank is needed at step 312. This could include, for example, the servo gauge 106 determining whether samples of the material 104 have been analyzed over the entire range of the material's height in the tank 102. If not, the position of the displacer is changed at step 314. This could include, for example, the servo gauge 106 winding the connector 107 around the drum 208 to raise the displacer 108 by a specified distance in the tank 102. The process then returns to step 304 to analyze another sample of the material 104 in the tank. Note that analyzing the material 104 in a bottom-to-top direction is merely illustrative and that any random or organized pattern of sampling could be used.

The identified characteristic(s) of the material in the tank can be used in any suitable manner at step 316. For example, the heat content or other characteristic(s) of the material 104 could be displayed to an operator, used to calculate the market value of the material 104, or used to identify any stratification of the material 104. The identified characteristic(s) could be used in any other suitable way.

Although FIGURE 3 illustrates one example of a method 300 for using a servo gauge supporting Raman spectroscopy in an inventory management system, various changes may be made to FIGURE 3. For example, while shown as a series of steps, various steps in FIGURE 3 could overlap, occur in parallel, occur in a different order, or occur multiple times.

In some embodiments, various functions described above are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The terms "transmit" and "receive," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. An apparatus comprising:
a servo gauge (106) comprising:
a displacer (108) configured to be raised and lowered within material (104) in a tank (102);
at least one light source (224) configured to illuminate a sample of the material at the displacer;
at least one detector (226) configured to measure radiation that has interacted with the sample of the material at the displacer; and
an analyzer (228) configured to perform Raman spectroscopy analysis of measurements from the at least one detector and identify at least one characteristic of the material.

2. The apparatus of Claim 1, wherein:
the servo gauge is configured to move the displacer to multiple locations within the tank; and
the analyzer is configured to identify a composition of the material at each location in the tank.

3. The apparatus of Claim 2, wherein the analyzer is configured to identify stratification of the material in the tank based on the composition of the material at the multiple locations.

4. The apparatus of Claim 1, wherein the analyzer is configured to identify a composition of the material in the tank and to identify a heat content of the material based on the composition.

5. The apparatus of Claim 1, wherein:
the servo gauge further comprises a connector (107) coupling the displacer and a housing (236); and
the connector comprises at least one optical fiber (252) configured to transport radiation from the at least one light source to the displacer and to transport radiation that has interacted with the sample to the at least one detector.

6. The apparatus of Claim 1, wherein the servo gauge further comprises:
a connector (107) coupled to the displacer; and
a drum (208) around which the connector is wound, the drum configured to rotate to thereby raise and lower the displacer.

7. A method comprising:
positioning (302) a displacer (108) of a servo gauge (106) within material (104) in a tank (102);
illuminating (304) a sample of the material at the displacer;
measuring (306) radiation that has interacted with the sample of the material at the displacer; and
performing (308) Raman spectroscopy analysis of the measured radiation to identify (310) at least one characteristic of the material.

8. The method of Claim 7, further comprising:
moving (314) the displacer to multiple locations within the tank; and
identifying (310) a composition of the material at each location in the tank.

9. The method of Claim 8, wherein the multiple locations span substantially an entire height of the material in the tank.

10. The method of Claim 8, further comprising:
identifying stratification of the material in the tank based on the composition of the material at the multiple locations.

11. The method of Claim 7, further comprising:
identifying (310) a composition of the material in the tank; and
identifying (310) a heat content of the material based on the composition.

12. The method of Claim 7, wherein:
a connector (107) couples the displacer to a housing (236) of the servo gauge;
the connector comprises at least one optical fiber (252); and
the method further comprises using the at least one optical fiber to transport radiation from at least one light source (224) to the displacer for illuminating the sample and to transport the radiation that has interacted with the sample to at least one detector (226) for measurement.

13. A non-transitory computer readable medium embodying a computer program, the computer program comprising computer readable program code for:
receiving measurements of radiation that has interacted with a sample of material (104) in a tank (102) at a displacer (108) of a servo gauge (106) positioned within the tank; and
performing Raman spectroscopy analysis of the measurements to identify at least one characteristic of the material.

14. The computer readable medium of Claim 13, wherein the computer program further comprises computer readable program code for:
controlling a positioning of the displacer within the tank to move the displacer to multiple locations in the tank.

15. The computer readable medium of Claim 13, wherein the computer program further comprises computer readable program code for:
identifying a composition of the material at each of multiple locations in the tank.
